# EUROPÄISCHE PATENTANMELDUNG

(11) **EP 3 705 785 A1**
(43) Veröffentlichungstag der Anmeldung: **09.09.2020**
(21) Anmeldenummer: 20158660.9
(22) Anmeldetag: 21.02.2020
(51) Int. Cl.: F24D 3/10, F24D 19/10, F24D 3/08, F24H 9/14

(54) **ANSCHLUSSSTATION FÜR FLÜSSIGE MEDIEN FÜR ZUMINDEST EINEN GEBÄUDEABSCHNITT, INSBESONDERE FÜR EINE WOHNEINHEIT**

(30) Priorität: 08.03.2019 DE 102019105921
(71) Anmelder: Pommerening, Marc, 31789 Hameln (DE)
(72) Erfinder: Pommerening, Marc, 31789 Hameln (DE); Böhning, Holger, 31860 Emmertal (DE); Pärisch, Peter, 31785 Hameln (DE)
(74) Vertreter: Jabbusch, Matthias

(57) **Zusammenfassung**

Bei einer Anschlussstation für flüssige Medien für zumindest einen Gebäudeabschnitt, insbesondere für eine Wohneinheit, mit Heizungsvorlauf- und Heizungsrücklauf-Versorgungsanschlüssen und mit einem Trinkwasser-Versorgungsanschluss und mit wenigstens einem Wärmetauscher, durch den eine Trinkwasserleitung geführt ist und der mit dem Heizungsvorlauf verbunden ist, ist vorgesehen, dass in der Station in den Heizungsvorlauf zumindest eine Pumpe gesetzt ist, der eine elektronische Steuerung zugeordnet ist, wobei die elektronische Steuerung mit zumindest einem zwischen dem Heizungsvorlauf und dem Heizungsrücklauf angeordneten Differenzdruckmesser verschaltet ist.

Bei dieser Anschlussstation ist der apparative Aufwand für das Bewegen der Medien verringert und es kann Energie eingespart werden.

## Beschreibung

Die Erfindung betrifft eine Anschlussstation für flüssige Medien für zumindest einen Gebäudeabschnitt, insbesondere für eine Wohneinheit, mit Heizungsvorlauf-und Heizungsrücklauf-Versorgungsanschlüssen und mit einem Trinkwasser-Versorgungsanschluss und mit wenigstens einem Wärmetauscher, durch den eine Trinkwasserleitung geführt ist und der mit dem Heizungsvorlauf verbunden ist.

Eine derartige Anschlussstation, auch Übergabestation, dient zum Anschluss von Medienleitungen eines Gebäudeabschnittes an insbesondere zentrale Versorgungsleitungen für Medien. Bei diesen Gebäudeabschnitten kann es sich beispielsweise um Wohneinheiten zum Beispiel in einem mehretagigen Wohnhaus handeln. Dieses Wohnhaus erhält vom kommunalen Versorger über entsprechende zentrale Leitungen Frischwasser, im Keller des Hauses oder in einem speziellen Heizungsraum wird eine Heizungsanlage angeordnet sein, die Vorlauf- und Rücklaufleitungen für ein Heizungsmedium für die Wohneinheiten zur Verfügung stellt. Damit jede Wohneinheit an Frischwasser, Heizungsvorlauf und Heizungsrücklauf angeschlossen werden kann, ist eine gattungsgemäße Anschlussstation notwendig. Diese verbindet die Leitungen in der Wohneinheit beispielsweise zu Heizkörpern oder auch zu Fußbodenheizungen mit den Versorgungsleitungen. Dazu dienen die angegebenen Versorgungsanschlüsse.

Damit in einem derartigen Gebäudeabschnitt auch warmes Wasser erzeugt werden kann, ist der Wärmetauscher vorgesehen. Mit diesem kann Trinkwasser erwärmt werden, damit es für zum Beispiel zum Duschen zur Verfügung steht. Die Erwärmung erfolgt durch einen Wärmeübertrag vom Heizungsvorlauf auf das Trinkwasser in dem Wärmetauscher.

Auch wenn auf diese Weise bereits in der Anschlussstation warmes Trinkwasser erzeugt wird, steht insbesondere das Medium Heizungsvorlauf mit hohem Druck beispielsweise über mehrere Etagen an der Anschlussstation an. Dazu ist im Bereich des Heizkessels regelmäßig eine Pumpe vorgesehen, die entsprechend ausgelegt werden muss, um das Heizungsmedium im Heizungsvorlauf bis in höhere Etagen zu bringen. Diese zentrale Versorgungspumpe muss kontinuierlich einen relativ hohen Versorgungsdruck bereitstellen.

Der Erfindung liegt die Aufgabe zugrunde, eine Anschlussstation für flüssige Medien aufzuzeigen, mit der der apparative Aufwand für das Bewegen der Medien verringert ist, wobei Energie eingespart werden soll.

Diese Aufgabe ist erfindungsgemäß dadurch gelöst, dass in der Station in den Heizungsvorlauf zumindest eine Pumpe gesetzt ist, der eine elektronische Steuerung zugeordnet ist, wobei die elektronische Steuerung mit zumindest einem zwischen dem Heizungsvorlauf und dem Heizungsrücklauf angeordneten Differenz-druckmesser verschaltet ist.

Bei der erfindungsgemäßen Anschlussstation ist die Anordnung der Pumpe aus einem Heizungskeller oder einem Heizungsraum in die Anschlussstation selbst verlagert worden. Mit der Pumpe kann bei Bedarf aus den Versorgungsanschlüssen Heizungsmedium entnommen werden, um es für die Erwärmung zum Beispiel der Wohneinheit oder für die Bereitstellung erwärmten Trinkwassers einzusetzen. Das Vorhalten einer großen Versorgungspumpe im Heizungskeller ist nicht weiter erforderlich. Das Heizungsmedium kann im Heizungsvorlauf einfach anstehen, mit der Pumpe in der Anschlussstation wird dann die benötigte Menge Heizungsmedium entnommen. Die innerhalb der Anschlussstation verbaute Pumpe kann dabei kleiner und preiswerter ausgebildet sein, da sie lediglich einen Gebäudeabschnitt versorgen muss, beispielsweise eine Wohneinheit in ein und derselben Ebene.

Der Pumpe ist über eine Steuerung ein Differenzdruckmesser zugeordnet. Mit dem Differenzdruckmesser können Differenzdrücke zwischen dem Vorlauf und dem Rücklauf aufgenommen werden. Die Pumpe kann über die elektronische Steuerung so gefahren werden, dass sich an dem Differenzdruckmesser die gewünschten Drücke einstellen. So ist beispielsweise für ein Fördern von Heizungsmedium für Heizzwecke ein geringerer Druck von beispielsweise 200 mbar notwendig. Für das Zubereiten von erwärmten Trinkwasser mit dem Wärmetauscher ist dagegen beispielsweise ein höherer Druck von 600 mbar notwendig. Die Pumpe kann mit der elektronischen Steuerung für jeden Einsatzzweck optimal und damit auch einmal unter geringerer Belastung benutzt werden, ein ständiges Laufen der Pumpe unter hohen Anforderungen ist vorteilhaft nicht erforderlich. Der Differenzdruckmesser misst dabei vorzugsweise fortlaufend die Druckdifferenz zwischen Heizungsvorlauf und Heizungsrücklauf.

Nach einer ersten Weiterbildung der Erfindung ist vorgesehen, dass die elektronische Steuerung eine Drehzahlregelung für die Pumpe aufweist. Die voneinander verschiedenen Pumpendrücke können über verschiedene Drehzahlen eingestellt werden. Diese werden von der elektronischen Steuerung der Pumpe auferlegt.

Eine nächste Weiterbildung der Erfindung sieht vor, dass die elektronische Steuerung mit einem Umschaltventil verknüpft ist, wobei das Umschaltventil in den Heizungsrücklauf eingesetzt ist und mit Teilrücklaufleitungen verbunden ist. Das die Pumpe und die Verbraucher wie Heizkörper und/oder Wärmetauscher passierende Heizungsmedium wird im Rücklauf mit dem Umschaltventil in die Rücklaufleitung eingeführt. In das Umschaltventil münden verschiedene Rücklaufteilleitungen, in denen das Heizungsmedium zurückfließt. Die Rücklaufteilleitungen kommen beispielsweise vom Wärmetauscher, von Heizkörpern oder auch von Flächen-heizungen, wie Fußbodenheizungen. Das Heizungsmedium wird zu diesen Verbrauchern im Heizungsvorlauf mit den notwendigen Differenzdrücken geführt, die von der Pumpe erzeugt werden. Für jeden Anwendungsfall wird der richtige Druck eingesetzt, so dass die einzelnen Komponenten optimal mit den notwendigen Medien versorgt werden.

Mit der Pumpe und dem Umschaltventil können in der Anschlussstation zwei Betriebszustände eingestellt werden. Der eine Betriebszustand ist das Heizen zum Beispiel der Wohneinheit und der andere Betriebszustand ist das Erzeugen von warmem Trinkwasser. Dabei wird das benötigte warme Heizmedium nach Bedarf und mit dem entsprechenden Druck bereitgestellt, es ist kein stetes Pumpen durch eine große Pumpe im Heizungskeller und ein anschließendes Wegregeln der Drücke mit energieintensiven Ventilen notwendig. Das spart elektrische Energie.

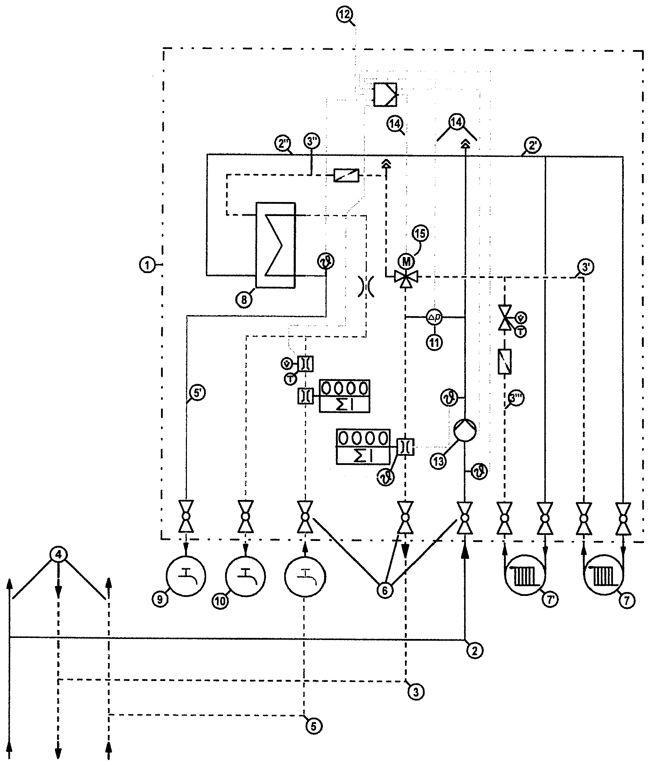

Ein Ausführungsbeispiel der Erfindung ist in der Zeichnung dargestellt. Die einzige Figur der Zeichnung zeigt eine schematische Darstellung einer erfindungsgemäßen Anschlussstation.

Die erfindungsgemäße Anschlussstation ist in einem Gehäuse 1 angeordnet, das durch eine Linie verdeutlicht ist. In die Anschlussstation führt ein Heizungsvorlauf 2, aus der Anschlussstation ist ein Heizungsrücklauf 3 herausgeführt. Die Leitungen 2 und 3 sind von zentralen Leitungen 4 abgezweigt. Diese zentralen Leitungen 4 können zu anderen Anschlussstationen gegebenenfalls auch in anderen Etagen führen. Als weitere Leitung ist ein Trinkwasserzulauf 5 vorgesehen. Die Anschlussstation weist Anschlüsse 6 für diese Zu- und Abläufe 2, 3, 5 auf.

Im Inneren des Gehäuses 1 wird die Heizungsvorlaufleitung 2 in der Zeichnung nach oben geführt, während sie mit einer Teilleitung 2' zu Heizkörpern 7 und Fußbodenheizungen 7' verläuft. Auf der anderen Seite des Heizungsvorlaufs 2 wird das Heizmedium über eine Teilleitung 2" zu einem Wärmetauscher 8 geführt. Vom Wärmetauscher 8 und den Heizkörpern 7 ausgehende Rücklaufteilleitungen 3" und 3' münden in den zentralen Heizungsrücklauf 3 ein
Der Trinkwasserzulauf 5 mündet in eine Entnahme 9 von kaltem Wasser oder in eine Entnahme 10 von warmem Wasser. Diese Entnahme 10 für warmes Wasser wird durch eine Teilleitung 5' vom Wärmetauscher 8 versorgt.

Zwischen dem Heizungsvorlauf 2 und dem Heizungsrücklauf 3 ist innerhalb des Gehäuses 1 ein Differenzdruckmesser 11 angeordnet. Dieser Differenzdruckmesser 11 ist über eine elektronische Steuerung 12 mit einer Pumpe 13 verknüpft, wobei die Pumpe 13 im Inneren des Gehäuses 1 im Heizungsvorlauf 2 angeordnet ist. Von der elektronischen Steuerung 12 verlaufen Datenleitungen 14 zum Differenzdruckmesser 11 und zur Pumpe 13 sowie zu weiteren Bauteilen innerhalb der erfindungsgemäßen Anschlussstation. Dabei wird die elektronische Steuerung über eine Leitung 12' mit elektrischer Energie versorgt.

Die elektronische Steuerung 12 ist über eine weitere Datenleitung 14 mit einem Umschaltventil 15 verbunden. Dieses ist in den Heizungsrücklauf 3 eingesetzt und nimmt Teilrücklaufleitungen 3', 3" und 3'" auf. Die Teilrücklaufleitungen 3', 3'" verbinden die Heizkörper 7 und die Fußbodenheizung 7' mit dem Umschaltventil 15, während die Teilleitung 3" den Wärmetauscher 8 mit dem Umschaltventil 15 verbindet. Über die elektronische Steuerung 12 wird eingestellt, welches Medium aus welcher Teilrücklaufleitung 3', 3", 3'" mit der Pumpe 13 gerade gefördert werden soll, mit Hilfe des Differenzdruckmessers 11 und der Pumpe 13 kann auf der Vorlaufseite dann ein angepasster Druck eingestellt werden.

## Patentansprüche

1. Anschlussstation für flüssige Medien für zumindest einen Gebäudeabschnitt, insbesondere für eine Wohneinheit, mit Heizungsvorlauf- und Heizungsrücklauf-Versorgungsanschlüssen und mit einem Trinkwasser-Versorgungsanschluss und mit wenigstens einem Wärmetauscher, durch den eine Trinkwasserleitung geführt ist und der mit dem Heizungsvorlauf verbunden ist,
**dadurch gekennzeichnet,**
**dass** in der Station in den Heizungsvorlauf (2) zumindest eine Pumpe (13) gesetzt ist, der eine elektronische Steuerung (12) zugeordnet ist, wobei die elektronische Steuerung (12) mit zumindest einem zwischen dem Heizungsvorlauf (2) und dem Heizungsrücklauf (3) angeordneten Differenzdruckmesser (11) verschaltet ist.

2. Anschlussstation nach Anspruch 1, **dadurch gekennzeichnet, dass** die elektronische Steuerung (12) eine Drehzahlregelung für die Pumpe (13) aufweist.

3. Anschlussstation nach Anspruch 1 oder 2, **dadurch gekennzeichnet, dass** der Differenzdruckmesser (11) die Druckdifferenz zwischen Heizungsvorlauf (2) und Heizungsrücklauf (3) misst.

4. Anschlussstation nach einem der vorhergehenden Ansprüche, **dadurch gekennzeichnet, dass** die elektronische Steuerung (12) mit einem Umschaltventil (15) verknüpft ist, wobei das Umschaltventil (15) in den Heizungsrücklauf (3) eingesetzt ist und mit Teilrücklaufleitungen (3', 3") verbunden ist.

5. Anschlussstation nach Anspruch 4, **dadurch gekennzeichnet, dass** eine Teilrücklaufleitung (3") vom Wärmetauscher (8) zum Umschaltventil (15) verläuft.

6. Anschlussstation nach Anspruch 4 oder 5, **dadurch gekennzeichnet, dass** eine andere Teilrücklaufleitung (3') von Heizkörpern zum Umschaltventil (15) verläuft.

7. Anschlussstation nach einem der vorhergehenden Ansprüche 4 bis 6, **dadurch gekennzeichnet, dass** eine weitere Teilrücklaufleitung (3"') von zumindest einer Flächenheizung, insbesondere einer Fußbodenheizung, zum Umschaltventil (15) verläuft.
